(19) Europäisches Patentamt
European Patent Office
Office européen des brevets

(11) **EP 2 385 024 A1**

(12) **EUROPEAN PATENT APPLICATION**

(43) Date of publication:
**09.11.2011 Bulletin 2011/45**

(51) Int Cl.:
*C03B 19/14* [(2006.01)]       *C03C 3/076* [(2006.01)]
*C03C 3/06* [(2006.01)]        *G03F 1/00* [(2006.01)]

(21) Application number: **11155919.1**

(22) Date of filing: **25.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.02.2010 US 308073 P**
**16.02.2011 US 28516**

(71) Applicant: **Corning Incorporated**
**Corning NY 14831 (US)**

(72) Inventors:
• **Duran, Carlos**
**Ottawa Ontario K2K 2L7 (CA)**
• **Hrdina, Kenneth Edward**
**Horseheads, NY 14845 (US)**
• **Maxon, John Edward**
**Canton, NY 13617 (US)**

(74) Representative: **Anderson, James Edward George**
**Elkington and Fife LLP**
**Prospect House**
**8 Pembroke Road**
**Sevenoaks, Kent TN13 1XR (GB)**

(54) **Improved expansivity in low expansion silica-titania glasses**

(57)   Field
This disclosure is directed to tailoring and improving the expansivity of low thermal expansion silica-titania glass through changes in the [OH] content and fictive temperature of the glasses. The [OH] concentration in the glass can be in the range of 600-2500ppm. The fictive temperature, $T_F$ is less than 900°C.

FIG. 1

EP 2 385 024 A1

## Description

Priority

This application claims the priority of the United States Provisional Patent Application No. 61/308073 titled "Improved Expansivity in Low Expansion Silica-Titania Glasses" that was filed February 25, 2010 in the name of inventors Kenneth E, Hrdina and John E. Maxon and United States Patent Application No. 13/028472 that was filed February 16, 2011.

Field

This disclosure is directed to tailoring and improving the expansivity of low thermal expansion silica-titania glass through changes in the [OH] content and fictive temperature of the glasses.

Background

Silica-titania glasses have been known for several decades. U.S Patent No. 3,690,855, "*Method for producing $TiO_2$ - $SiO_2$ Glasses*," teaches that a glass consisting of 1-20 wt% $TiO_2$ has a coefficient of thermal expansion (CTE) of essentially zero over a temperature range of -200°C to 700°C with heat treatment. However, there is considerable difficulty in polishing this material due to the presence of a titania crystalline phase in the glass. As a result, the glass cannot be readily used in some application such as those for image masks. European Patent No. 1 608 598 teaches a silica-titania containing glass with a fictive temperature ($T_F$) of 1200°C or lower, the glass having with [OH] levels (concentration) "at most" 600 pm or less. However, this glass obtains low $T_F$ values only at lower [OH] levels; and does not identify high OH as a means of getting lower $T_F$ values with improved expansivity properties. U.S. Patent Application Publication No. US2006/0179879 A1 teaches a method of making a silica-titania glass which has an [OH] level in the range of 100 ppm to 1500 ppm.

Silica-titania such as ULE® glass (Coming Incorporated) has been identified by the by the EUV (extreme ultraviolet) industry as a material highly useful for extreme ultraviolet lithographic (EUVL) applications due to its polishability and zero-CTE crossover range at 20°C of 0 $\pm$ 5 ppb/°C. In the area of EUV lithography, in 2007, the International Technology Roadmap for Semiconductors found that there is a likelihood of increasing the number of mirrors needed in the imaging lens in order to improve resolution. As a result, it will be necessary to use higher energy power sources in order to compensate for losses (primarily due to scatter and heating of elements) during the lithographic process. With the use of higher energy power sources there will be a higher thermal gradient in the lenses that could lead to problems unless there is a CTE improvement in the present silica-titania materials being used. For example, photomask temperatures could reach temperatures as high as 80°C. Additionally, there is the expectation that future specifications will have more stringent overall requirements that the current silica-titania materials may not be to meet.

As a result of the present and forthcoming changes for silica-titania glasses for use in EUV lithography, improvements are required. The present disclosure is directed to new silica-titania glasses that have an improved expansivity over current glasses. As will be shown herein, the teaching of the present disclosure are counter to prior art teaching that one needs to reduce the [OH] content to obtain a lower $T_F$ and hence improve expansivity.

Summary

The present disclosure is directed to silica-titania glasses (also known as titania doped silica glasses) with low fictive temperatures ($T_F$) and an increased [OH] content, the [OH] content being in the range of 600 ppm to 2500 ppm. In one embodiment the [OH] content is in the range of 800-2000 ppm. The silica-titania glass according to the disclosure has a titania content in the range of 5 wt% to 14 wt%. In one embodiment the titania content is in the range of 6.5 wt% to 9 wt%. The silica-titania glass disclosed with an improved expansivity can be used, for example without limitation, in semiconductor optics, masks and stages, nano-imprint technology, and for mirrors for optics in space applications.

In another embodiment the disclosure is directed to a method of making silica-titania glasses with low fictive temperatures ($T_F$) and an increased [OH] content, the [OH] content being in the range of 600 ppm to 2500 ppm, using selected controlled an2500 ppm enables the formation of silica titania glasses with lower fictive temperatures and improved thermal expansion behavior for a given annealing rate or cycle than glasses having lower [OH], for example, [OH] of 600 ppm or less. In one embodiment the [OH] is greater than 600 ppm and $T_F$ is less than 950°C. In another embodiment the [OH] is greater than 600 ppm and $T_F$ is less than 900°C. In an additional embodiment the silica-titania glass has a fictive temperature $T_F$ of less than 950°C and an OH content of ≥800 ppm. On a further embodiment the glass has a fictive temperature $T_F$ of less than 900°C and an OH content of ≥800ppm.

In an additional embodiment the disclosure is directed to a silica-titania glass whose ΔCTE is less than 75 ppb/°K over the temperature interval between 20°C and 100°C. In one aspect ∆CTE is less than 70 ppb/°K over the temperature interval between 20°C and 100°C. In a further aspect ∆CTE is less than 65 ppb/°K over the temperature interval between 20°C and 100°C.

The disclosure is also directed to a silica-titania glass whose expansivity, $\delta CTE/dT$, is less than 1.6 ppb/°K$^2$ at 20°C. In one embodiment $\delta CTE/dT$, is less than 1.5 ppb/°K$^2$. In another embodiment $\delta CTE/dT$, is less than 1.4ppb/°K$^2$.

The disclosure is also directed to a methods for making a silica titania glass. In one embodiment the silica-titania can be made by soot-to-glass process, in which a silica-titania soot is deposited in a vessel as particulates, or on a paten or mandrel as a preform, and consolidation of the soot or preform takes place at consolidation temperatures in partial pressures of water greater than 3%. In another embodiment the partial pressure of water is greater than greater than 4%.

In another embodiment a direct process is used to make the silica-titania glass. In the direct process in accordance with this disclosure, silica-titania particles are formed by combustion of silica precursor and a titania precursor material in a burner, and the particles are consolidated into a glass in an atmosphere having a partial pressure of water greater than 3%, the consolidation being substantially simultaneous with the formation of the particles and their deposition in a vessel. In the direct process the time between silica-titania particle formation and consolidation into glass is less than 3 seconds, and typically less than 2 seconds. In one embodiment the consolidation occurs in a atmosphere having a partial pressure of water greater than 3%. In another embodiment the partial pressure of water is greater than greater than 4%.

The objective of the annealing schedule is to impart a uniform and controlled fictive temperature to the glass. The silica-titania glasses disclosed herein have an annealing point of 1040°C or less. An example shown herein has an annealing point of approximately 1010°C. In one embodiment the annealing is carried out by heating the glass from room temperature ("RT," approximately 18-25°C) to a selected temperature that is at or below the annealing point of the glass since the fictive temperature will be below the annealing point of the glass. The heating can be at any rate, for example, the selected heating rate is between 25°C/Hr and 150°C/Hr. The glass is then held at the selected temperature for a time in the range 1 hour to 500 hours depending on the thickness of the glass to insure that the glass reaches a nominally uniform fictive temperature throughout the glass. In one embodiment the glass is held at the temperature for a time in the range of 75-125 hours. In one embodiment the glass is heated from RT to the point near the desired fictive temperature at a rate of less than 50°C/Hr. In another embodiment the glass is heated from RT to 600°C at a rate in the range of 50-100°C/Hr, from 600°C to 800°C at a rate in the range of 25-50°C/Hr, and from 800°C to point near the desired fictive temperature in the 840°C to 1010°C at a rate in the range of 10-25°C/Hr. The glass is then held at the temperature for a time in the range of 1-200 hours. The glass can then be cooled, for example at a rate of ≤10°/Hr. In another embodiment the cooling rate is ≤5°C/Hr. In another embodiment the cooling rate is ≤3°C/hr.

Brief Description of the Drawings

Figure 1 is a comparison of the CTE of Cervit® (Corning Incorporated), ULE® and the glass of U.S. Patent 3,390,855 (labeled 918 AS) and illustrating flatness of the curves for the different materials.

Figure 2 is a graph of the "thermal expansion coefficient in the temperature range of 25-300°C" versus "Total Heat Treatment Time" for a 15 wt% silica-titania glass.

Figures 3A and 3B together illustrate the method used to calculate fictive temperature based on a paper by Shelby, "Density of TiO2 Doped Vitreous Silica," Phys. Chem. of Glasses, Vol. 46 [5] (1995), pages 494-499.

Figure 4 is a graph illustrating the fictive temperature changes as a function of the log of the annealing rate for a given $TiO_2$-$SiO_2$ glass with nominally 800 ppm OH and 7.4 wt% $TiO_2$.

Figures 5A and 5B are two charts illustrating the viscosity behavior of titania contain glasses with nominally 800 ppm OH whose CTE is nominally -15 ppb/°K and 5 ppb/°K.

Figure 6 is graph showing a semi-empirical relationship between the partial pressure of water in the gas phase and the resultant [OH] in a $TiO_2$-$SiO_2$ glass.

Figure 7 is a graph illustrating the impact of annealing on thermal expansion.

Figure 8 illustrates expansivity as a function of temperature for a silica-titania glass with nominally 800 ppm [OH] and 7.4 wt% $TiO_2$.

Figure 9 depicts an apparatus for making silica-titania glass by the direct method.

Figures 10(a) and 10(b) illustrate the steps of forming a porous silica-titania soot matrix on a bait using the VAD process and consolidating the porous preform into glass in an atmosphere having a partial pressure of water vapor of at least 3%.

Figure 11 is a graph illustrating the fictive temperature ($T_f$) versus the annealing cooling rate for a series of glasses with different OH content and nominally the same titania content of~7.4 wt% $TiO_2$,

Detailed Description

The invention will now be described in detail with reference to a few preferred embodiments, as illustrated in the accompanying drawings. In describing the preferred embodiments, numerous specific details are set forth in order to provide a thorough understanding of the invention. However, it will be apparent to one skilled in the art that the invention may be practiced without some or all of these specific details. In other instances, well-known features and/or process steps have not been described in detail so as not to unnecessarily obscure the invention. In addition, like or identical reference numerals are used to identify common or similar elements.

Herein the terms "silica-titania glass," titania doped silica," and similar terms mean a glass consisting $SiO_2$ and $TiO_2$. While the glass may contain trace metals and other elements as contaminants, the total trace metals should be less than 20 ppm and preferably less than 10 ppm; and the total halogen is less than 50 ppm and preferably less than 25 ppm.

Various processes exist by which high OH titania containing glasses can be made. In one embodiment, the glass was made via the direct process in which organic precursors of silica and titania are transported to burners where combustion takes place. Exemplary organic precursors are OMCTS (octamethylcyclotetrasiloxane) for silica and TTP (titanium tetra(isopropoxide, $Ti(OPri)_4$) for titania. These precursors are injected into a furnace cavity at high temperatures where they react to form silica and titania soot particles which are deposited at such that they are deposited and consolidated substantially simultaneously in a single step to form a silica-titania glass. In order to make a high OH glass, the key is to maintain a high partial pressure of water in the gas phase in the deposition chamber during deposition. Water vapor can be both generated and injected directly into the chamber. It could be generated from such reactions as by the combustion of methane, $CH_4 + O_2 - \rightarrow H_2O + CO$ (and/or $CO_2$ depending on how much oxygen is present). Water vapor can also be generated from reaction of hydrogen containing organic precursors and oxygen: for example, the organic moieties in PMCTS and TTP. In addition, water vapor can either be intentionally added or may enter the chamber as entrained air with some humidity level. Higher partial pressures of water will lead to higher OH levels in the glass. In one embodiment the partial pressure of water is greater than ≥3%. In another embodiment the partial pressure of water is ≥4%.

In another embodiment high OH silica-titania glass composition according to this disclosure are made by, for example without limitation, soot-to-glass processes such as the VAD (vertical axial deposition), OVD (outside vapor deposition), PSD or IVD (inside vapor deposition) in which the organic precursors are burned and deposited as porous soot in the first step. In a subsequent step the soot is consolidated at consolidation temperatures. During consolidation, the atmosphere in these process is normally helium by itself, which is a low OH atmosphere. In accordance with the present disclosure, the helium contains a partial pressure of water vapor exceeding about 3% or more. In some instances, the soot could be consolidated in pure water vapor or water vapor pressurized to 3 atmospheres in order to obtain OH levels of 600 ppm to 2500 ppm.

The above methods identify the methods by which silica-titania glasses with high OH levels can be made. Once the glass gas been made and fully consolidated, the next step is to anneal the glass at a rate of less than 100°C /Hr to obtain the desired low $T_F$. Since low $T_F$'s are desirable, cooling rates of less than 3°C/Hr are preferred. The $TiO_2$ concentration and annealing rate can be adjusted in order to obtain the desired cross over temperature and expansivity behavior. As an example, more titania can be added to increase the cross over temperature and some can be taken away to decrease the cross over temperature.

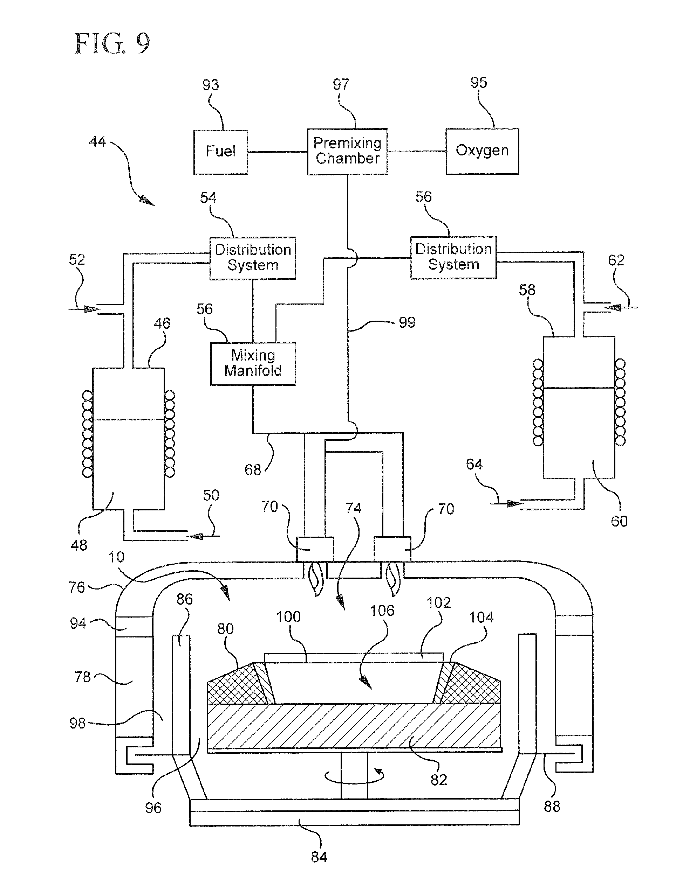

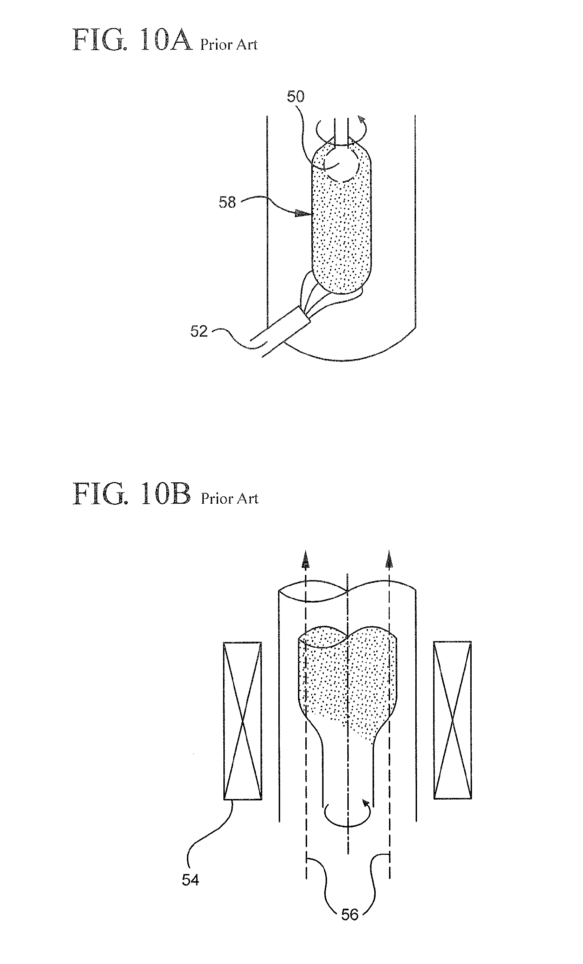

Figure 9 illustrates an apparatus for making, depositing and consolidating a silica-titania soot in a vessel, wherein the dashed arrows 110 designate the introduction of a gaseous atmosphere containing water vapor according to the present disclosure. Using this apparatus the soot can either be (a) collected and consolidation in one step (the direct method) or (b) collected in a first step and consolidated in a second step. The apparatus illustrated in Figure 10 are generally used to form boules having a diameter in the range of 0.2 meter to 2 meters, or larger and a thickness. As an example of the direct method, a source 46 of a silica precursor 48 and a source 58 of a titania precursor 60 are provided. The silica precursor 48 and titania precursor 60 are typically siloxanes, alkoxides, and tetrachlorides. One particularly commonly used silica precursor is OMCTS. One particularly commonly used titania precursor is $Ti(OPri)_4$. The sources 46, 58 may be vaporizers, evaporation tanks, or other equipment suitable for converting the precursors 48, 60 into vapor form. A carrier gas 50, such as nitrogen, is introduced at or near the base of source 46. The carrier gas 50 entrains the vapors of the silica precursor 48 and passes through a distribution system 54 to a mixing manifold 56. A by-pass stream of carrier gas is introduced at 52 to prevent saturation of the vaporous silica precursor stream. A stream of inert gas 62, e.g., nitrogen, can be brought into contact with the vaporous titania precursor to prevent saturation of the vapors. An inert carrier gas 64, e.g., nitrogen, entrains the titania precursor 60 vapors and carries the vapors through a distribution system 66 to the mixing manifold 56, where they are mixed with the silica precursor 48 vapors. Alternatively, the titania precursor 60 and the silica precursor 48 may be delivered to the mixing manifold 56 in liquid form. The mixture in the mixing manifold 56 passes through heated fume lines 68 to the burners 70 mounted on the furnace crown 72. In this illustration, two burners 70 are shown. However, more than two burners can be used to allow for better heat control and distribution of material across the deposition cavity 74. The furnace 76 may have rotation and oscillation capabilities and may include a stationary wall 78, which supports the crown 72. A containment vessel 80 is disposed within the stationary wall 78. The containment vessel 80 includes a base 82 which is supported for rotation and which also oscillates through its attachment to an oscillation table 84. The containment vessel 80 is surrounded by an air flow wall 86 which is mounted on the oscillation table 84. A motion accommodating seal 88 is formed between the stationary wall 78 and the containment vessel 80. The deposition cavity 74 is vented by a plurality of draft ports 94 formed at the top of the stationary wall 78. The draft ports 94 are connected to a suitable exhaust system (not shown) by ducting which creates a negative pressure in the deposition cavity 74 with respect to ambient pressure. Fuel 93 and oxygen 95 are premixed in the premixing chamber 97 and then transferred to the burners 70 through fume lines 99. The burners 70 ignite the fuel/oxygen mixture to produce a flame which heats the deposition cavity 74. The vaporous reactants injected into the burners 70 exit the burners 70 where they react and form titania-doped silica particles via flame hydrolysis or pyrolysis. The soot is directed downwardly and deposited on a planar surface 100, as shown at 102. The planar surface 100 may be provided by filling the liner 104 of the containment vessel 80 with cleaned cullet 106, although other means of providing a planar surface, such as a glass plate, may also be used. As the soot is deposited, the containment vessel 80, and hence the planar surface 100, is rotated and oscillated through the base 82 to improve index homogeneity of the silica. During soot deposition, the furnace 76 is drafted with ambient air, The temperature of the deposition cavity 74 is monitored and held at desired processing temperatures by adjusting the vertical position of the containment vessel 80. In the direct process the temperature is maintained at a consolidation temperature so that the silica-titania particles are formed and consolidate into glass substantially simultaneously. Such time is less generally less than three seconds and typically less than 2 seconds. In accordance with this disclosure, in order to obtain a high [OH] concentration in the glass, a partial pressure of water vapor, as described in the present disclosure. is maintained in the apparatus by injection of a gas containing a selected amount of water vapor at the top of the part of the furnace of Figure 9 as illustrated by dashed arrows 110.

In an alternate embodiment, steam, high temperature steam from a pressurized vessel (not illustrated), can be injected into the top part of the furnace of Figure 9 through feed lines that may also be represented by dashed arrows 110.

The soot particles 102 consolidate into a titania-doped silica glass inside the furnace 76. If desired, non-uniform reactions which may result in large variations in the CTE of the glass may be minimized by keeping the processing temperatures below that which is required for full consolidation of the soot particles 102. After deposition, the soot particles 102 can then be consolidated into glass, with maintenance of a partial pressure of water vapor in the furnace as described herein to that a high [OH] glass is formed.

As indicated above, silica-titania glass can also be made by soot-to-glass processes such as the VAD, OVD, PSD, or IVD in which the organic precursors are burned and deposited as porous soot in the first step. In a subsequent step the soot is consolidated at consolidation. As an example, the VAD process is used to make a consolidated silica-titania glass having a $TiO_2$ content in the range of 5-14 wt%. The VAD process has been described by S. Hayashi et al, "Development of Synthetic Silica Glass by the VAD Method", Sumitomo, Vol.42-3 (1990), pages 1-27 [translated by Phoenix Translations]. Figures 10(a) and 10(b) illustrate the steps of forming a porous silica-titania soot matrix by burning silica and titania precursors in a burner 52 and depositing the soot on a rotating bait 50 as illustrated in Figure 10(a). The bait 50 is gradually raised during the process to form a cylindrical soot perform 58. Once the preform 58 is formed it is consolidated by heating with heaters 54 as shown in Figure 10(b). In order to adjust the [OH] a gas containing a partial pressure of water vapor of at least 3% is flowed by and through the perform 58 during the consolidation process. As illustrated in Figure 10(b) the preform has been inverted relative to Figure 10(a) in order to allow gases within the preform to exit and thus to avoid the formation of inclusions (voids) within the glass during the consolidation process. The sintering is thus done from the lower end of the matrix to the upper end as illustrated in Figure 10(b). High [OH] levels in accordance with this disclosure can be achieved by the injection of water vapor or steam as described above.

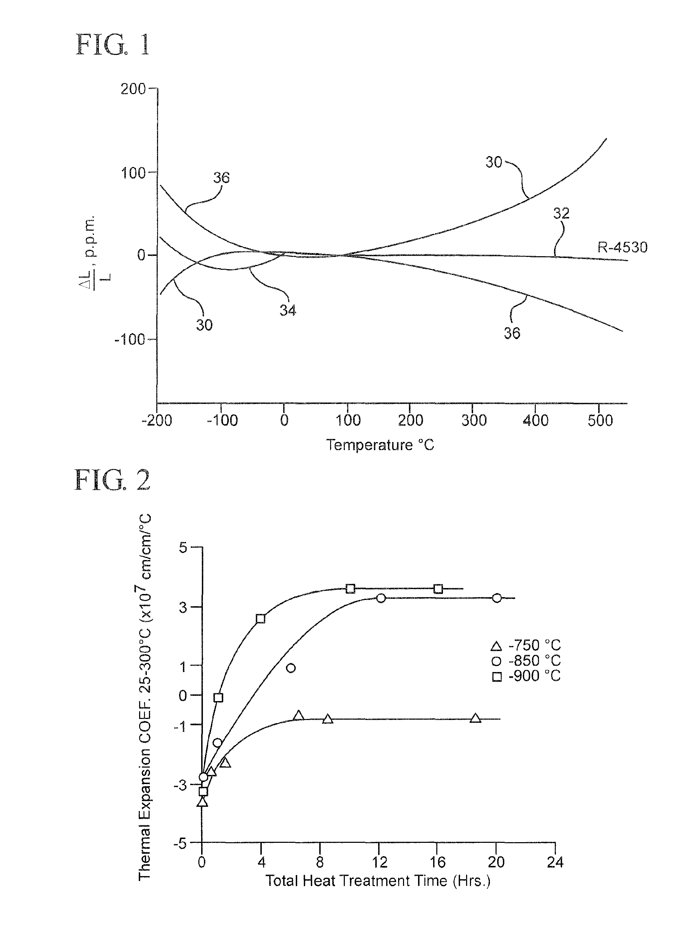

Figure 1 shows the comparison of CTE for Cervit® (30), ULE (36) and the material of US Patent 3,390,855 (918 AS (numeral 3) and 918 AS after heat treating at 900°C (numeral 34)). The expansivity of the glass 918 AS is flat over a wider temperature range than either of the other materials, but the disadvantage of this material is that it is not a single phase glass but a glass which contains titania crystallites. The titania crystallites have the potential of making polishing more difficult, especially to roughness levels of <1.5A rms. This for EUV applications is preferred that material be a glass is crystallite free or substantially crystallite free while have other desirable such as low thermal expansion and high polishability <1.5nm rms).

Figure 2 shows the effect of heat treatment of the material from US patent 3,690,855. The heat treatments in these high titania containing glasses result in precipitation of titania crystallites. Again, it is preferred that the material be a single phase glass that is easier to polish than a multiphase material.

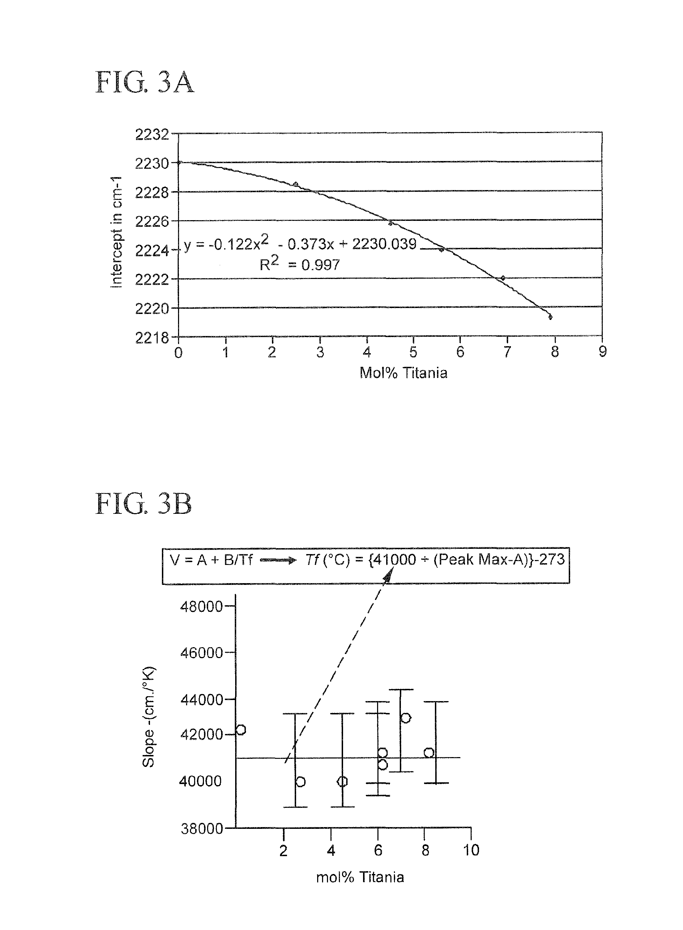

Figures 3A and 3B together illustrate the method used to calculate fictive temperature based on a paper by Shelby, "Density of TiO2 doped vitreous silica," Phys. Chem. of Glasses, Vol. 46 [5] (1995), pages 494-499. Figure 3A illustrates the effect the of $TiO_2$ concentration on the intercept for the Agarwal, Davis, Tomozawa equation (Tomozawa equation, Eq. 1) shown in Figure 3B. Figure 3B illustrates the use of the Eq.1:

$$V = A + B/Tf \quad \rightarrow \quad \mathit{Tf}(°C) = \{41000 \div (\text{Peak Max - A})\} - 273 \qquad (\text{Eq.1})$$

to calculate the intercept (A) in the Tomozawa equation for fictive temperature. V is the position of the band at 2260cm$^{-1}$ (peak maximum), A is the intercept, and B is the slope (43809.21). (See A. Agarwal, K.M. Davis, M. Tomozawa, J. Non-Crystalline Solids, Vol. 185 (1995), pages 191-198. In Figure 3B the symbol "o" (numeral 10) represents the data of the present disclosure.

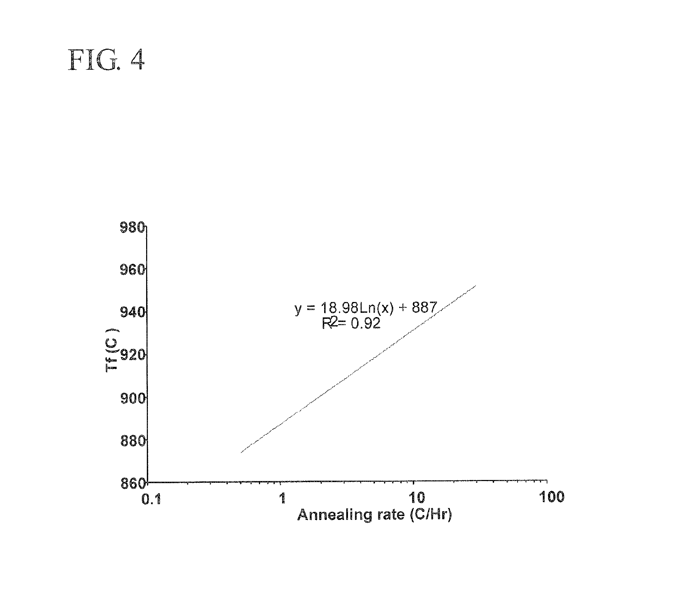

Figure 4 illustrates the fictive temperature changes as a function of the log of the annealing rate for a given titania doped silica glass with nominally 800 ppm OH and 7.4 wt% titania. The cooling or annealing rates are constant from about 1000°C to about 800°C.

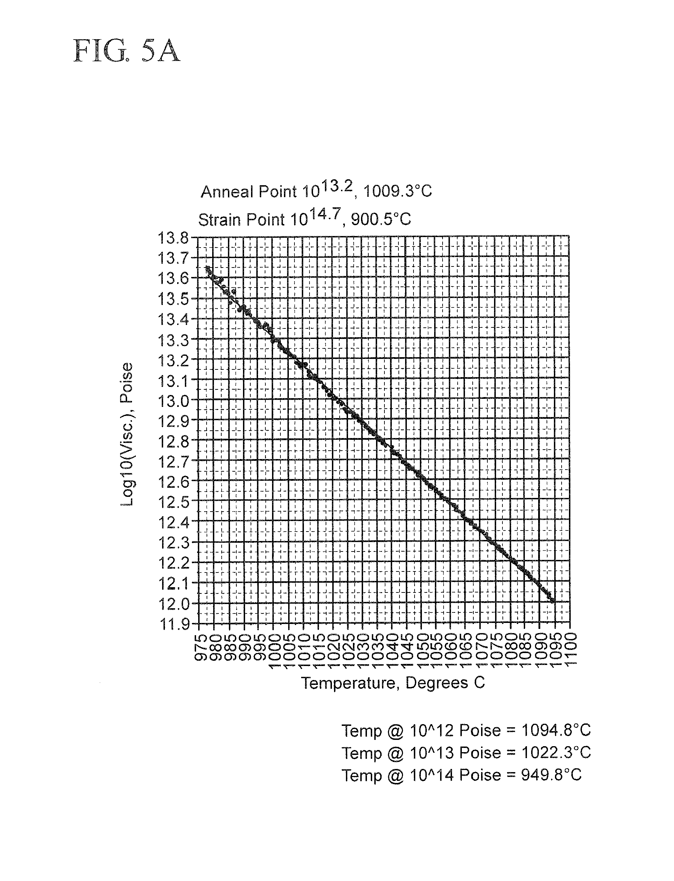

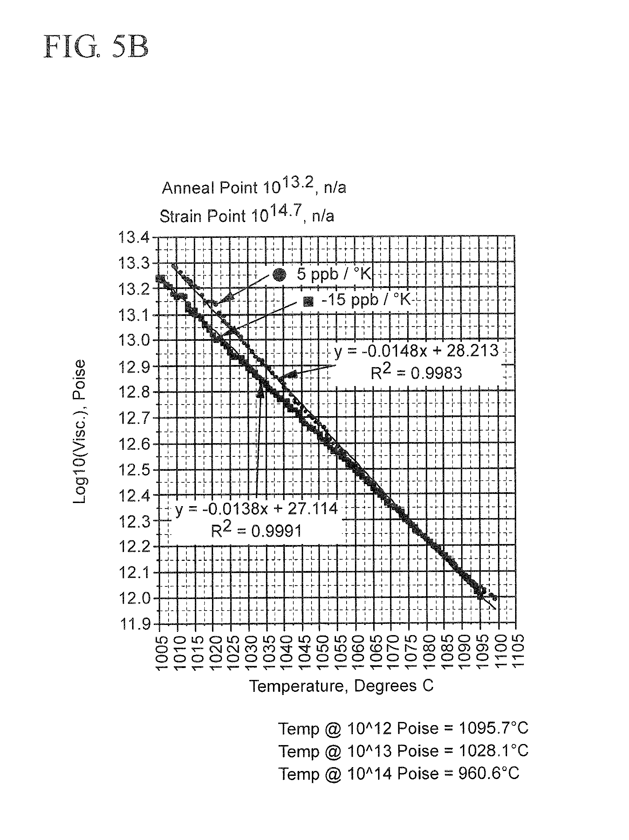

Figure 5 illustrates the viscosity behavior of titania containing silica glass with nominally 800 ppm OH. Whose CTE is nominally -15 ppb/K and 5 ppb/K at 20 C.

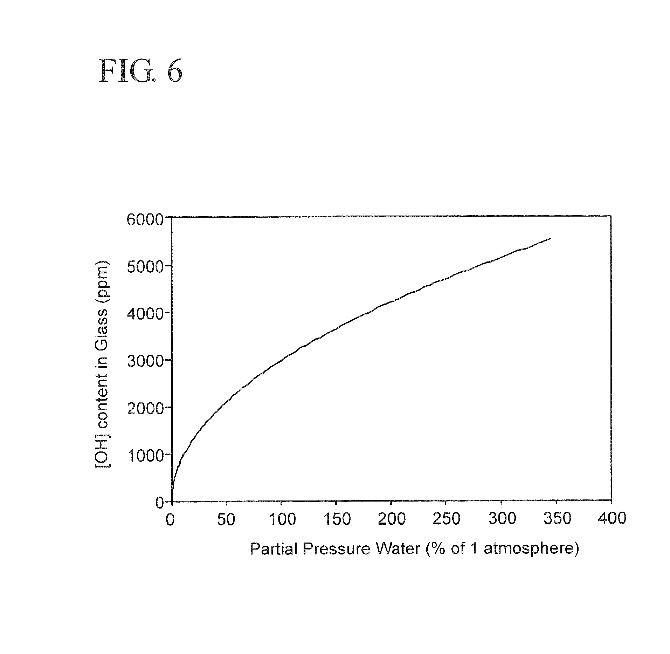

Figure 6 illustrates a semi-empirical relationship between partial pressure of water in the gas phase and the resultant [OH] in the glass. It demonstrates nominal partial pressures of water to target in order to achieve desired [OH] in the glass. For [OH] levels much greater than about 3000 ppm, the system would need to be pressurized.

EP 1 608 598 B1 contains a CTE versus Temperature graph of glasses having at most 600ppm OH and different fictive temperatures. However, this patent does not identify high OH as a means of getting lower $T_F$ values with improved expansivity properties. This patent thus described obtaining a glass with low $T_F$ values only at lower [OH] levels; and does not identify high OH as a means of getting lower $T_F$ values with improved expansivity properties, and in fact may be deemed to teach away from the present disclosure at Paragraphs [0025] and [0026].

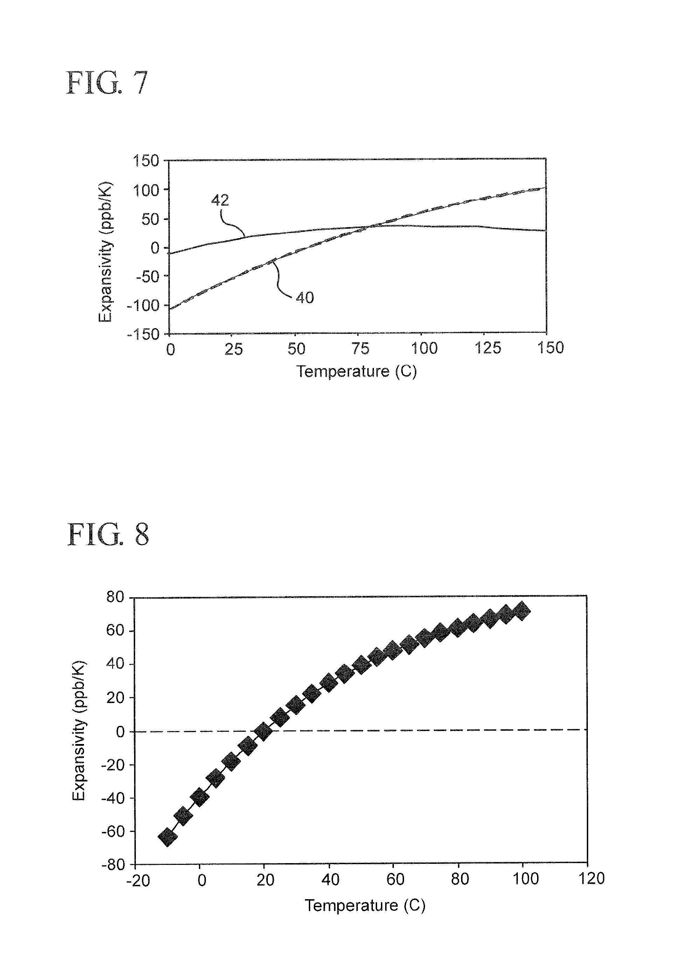

Figure 7 is a graph illustrating the impact of annealing on thermal expansion of silica glass containing 7.4 wt% titania glass. Numeral 40 represents un-annealed glass that was simply cooled in the furnace after it was made. Numeral 42 represent glass that was heated to an annealing temperature of approximately 1010° and cooled at a rate of 3°C/Hr.

Figure 8 illustrates expansivity as a function of temperature for a titania silica glass with nominally 800 ppm OH and 7.4 wt% $TiO_2$.

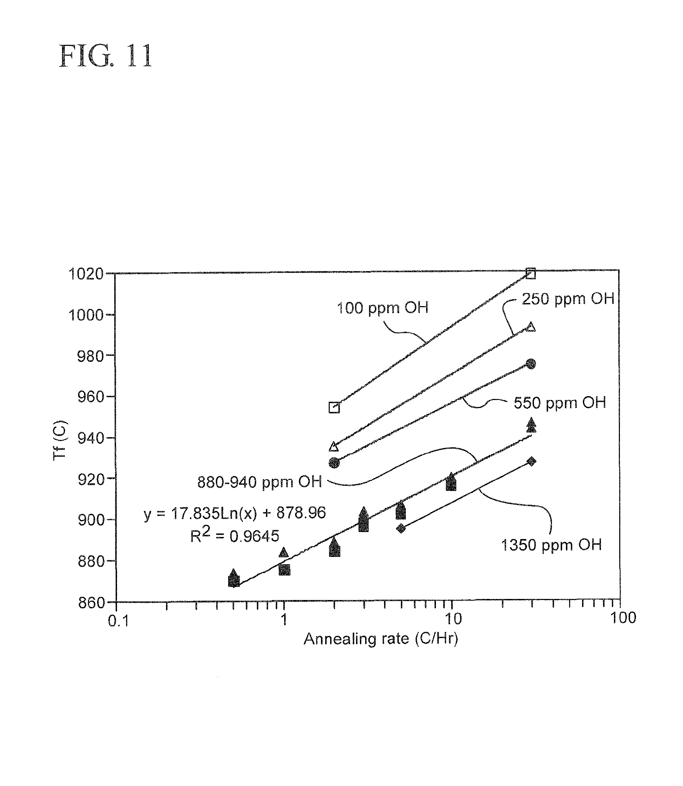

Figure 11 a graph illustrating the fictive temperature ($T_f$) versus the annealing cooling rate for a series of silica-titania glasses with different OH content and nominally the same titania content of~7.4 wt% $TiO_2$. For example, when the glass containing 880-940 ppm OH is cooled at a rate of 10°C/Hr the final fictive temperature ($T_f$) of the cooled glass will be approximately 920°c. When the same glass is cooled at a rate of 1 °c/Hr the final fictive temperature will be approximately 880°C. The glasses used in Figure 11 contained nominally 7.4 wt% titania. Figure 12 can be used as a guide for determining the cooling rate that should be used for obtaining a specific fictive temperature for a glass having a given OH content which is determined before it is given a heat treatment as described herein.

Thus, the disclosure is directed to a silica-titania glass consisting essentially of 5-14 wt% titania and 86-95 wt% silica, said glass having a hydroxyl content [OH] in the range of 600-2500 ppm and a $\Delta$CTE is less than 75 ppb/°K over the temperature range of 20°C to 100°C, and an expansivity, $\delta$CTE/dT, of less than1.6ppb/°K$^2$. The silica-titania glass can have a hydroxyl content [OH] is in the range of 800-2000 ppm. In one embodiment the silica-titania glass contains 6.5-9 wt% titania and 91-93.5 wt% silica. In one embodiment the silica-titania glass $\Delta$CTE is less than 65 ppb/°K over the temperature range of 20°C to 100°C. The silica-titania glasses herein have an annealing point of 1010 °C or less and the glass have a fictive temperature $T_F$ of less than 950°C. In one embodiment the fictive temperature $T_F$ is less than 900°C. Further, the silica-titania glass has an expansivity, $\delta$CTE/dT, is less than 1.5ppb/°K$^2$. In one embodiment the expansivity, $\delta$CTE/dT, is less than 1.4ppb/°K$^2$.

The disclosure is also directed to a method of making a silica-titania glass having a hydroxyl content [OH] in the range of 600-2500 ppm, said method comprising providing an apparatus at least one burner for converting a silica precursor and titania precursor into a silica-titania soot; forming silica-titania soot in said at least one burner, and performing one selected from the group consisting of (a) depositing and consolidating, substantially simultaneously in a single step, said soot into glass in an atmosphere having a partial pressure of water vapor of $\geq$ 3%, and (b) depositing said soot to form a porous perform and consolidating said soot into glass in an atmosphere having a partial pressure of water vapor of $\geq$ 3%; and annealing said consolidated glass at an annealing point of 1010°C or less to form a glass having a fictive temperature $T_F$ of less than 950°C. In one aspect the partial pressure of water is at least 4%. In another aspect the silica-titania soot is deposited as a porous perform and the porous preform is consolidated in an atmosphere of pure water vapor to obtain OH levels in the range of 600 to 2500 ppm. In another aspect the silica-titania soot is deposited as a porous perform and the porous preform is consolidated in water vapor pressurized to 3 atmospheres (for example, by using a heated pressure chamber) to obtain OH levels in the range of 600 to 2500 ppm. The apparatus illustrated in Figure 10 can be used to (i) make and deposit a silica-titania soot as a powder in a vessel or (ii) making a soot and depositing it with substantially simultaneously consolidation. In both cases the soot can be deposited in an atmosphere containing a partial pressure of≥3% water vapor. The apparatus illustrated in Figures 10a/10b, and similar apparati, are generally used to make porous preforms that are subsequently consolidated into a glass. In this case the soot can be (i) deposited in an atmosphere containing any partial pressure of water vapor, but should be consolidated in water vapor >3%, or (ii) consolidated in water vapor pressurized to 3 atmospheres (for example, by using a heated pressure chamber). .

The annealing, whose objective is to impart a uniform and controlled fictive temperature to the glass, was carried out by heating the glass from room temperature ("RT," approximately 18-25°C) to a selected temperature below the annealing point since the fictive temperature will be below the annealing point. The heating can be at any rate, for example, the heating rate is between 25°C/Hr and 150°C/Hr. In one embodiment the heating rate can be less than 25°C/Hr. The glass can held at the selected temperature for a time in the range of 1-500 hours depending on the thickness of the glass to insure that the glass reaches a nominally uniform fictive temperature throughout the glass. In one embodiment the glass was held at the selected temperature for a time in the range of 75-150 hours. The glass was then cooled at a rate of less than 100°C/Hr. In one embodiment the glass was cooled at a rate of ≤10°/Hr. In another embodiment the glass was cooled at a rate of ≤5°C/Hr. In a further embodiment the cooling rate was ≤3°C/hr. In one embodiment the glass was heated from RT to the annealing point at a rate of less than 50°C/Hr. In another embodiment the glass was heated from RT to the annealing point at a rate of less than 25°C/Hr. The glass was held at the annealing point for a time in the range of 1-200 hours, the exact time having a dependence on the thickness of the glass being annealed so that the glass reaches a substantially uniform temperature throughout.

In one example the glass is heated from RT to 600°C/Hr at a rate in the range of 50-100°C/Hr (for example 60-75°C/Hr), heated from 600°C to800°C at a rate in the range of 25-50°C/Hr (for example 30-40°C.Hr), and from 800°C to 1010°C/Hr at a rate in the range of 10-25°C/Hr (for example, 10-15°C/Hr). The glass was held at the annealing point for a time in the range of 75-150 hours. The glass was then cooled from the annealing point to RT at a rate of ≤5°C/Hr.

In another example the glass is heated from RT to an annealing point of 1010°C/Hr at a rate in the range of 5-10°C/Hr (for example 10°C/Hr), and held at the annealing point for a time in the range of 75-150 hours. The glass was then cooled to RT at a rate of ≤3°C/Hr.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1. A silica-titania glass consisting essentially of 5-14 wt% titania and 86-95 wt% silica, said glass having a hydroxyl content [OH] in the range of 600-2500 ppm and a ΔCTE is less than 75 ppb/°K over the temperature range of 20°C to 100°C, and an expansivity, δCTE/dT, of less than 1.6ppb/°K$^2$.

2. The silica-titania glass according to claim 1, wherein the hydroxyl content [OH] is in the range of 800-2000ppm

3. The silica-titania glass according to claim 1 or 2, where the glass is 6.5-9 wt% titania and 91-93.5 wt% silica.

4. The silica-titania glass according to any preceding claim, wherein the ΔCTE is less than 65 ppb/°K over the temperature range of 20°C to 100°C.

5. The silica-titania glass according to any preceding claim, wherein said glass has an annealing point of 1010 °C or less.

6. The silica-titania glass according to any preceding claim, wherein said glass has an annealing point of 1000 °C or less.

7. The silica-titania glass according to any preceding claim, wherein said glass has a fictive temperature $T_F$ of less than 950°C and an OH content of ≥800 ppm.

8. The silica-titania glass according to any preceding claim, wherein said glass has a fictive temperature $T_F$ of less than 900°C and an OH content of ≥800ppm.

9. The silica-titania glass according to any preceding claim, wherein expansivity, δCTE/dT, is less than 1.5ppb/°K$^2$ at 20°C.

10. The silica-titania glass according to any preceding claim, wherein expansivity, $\delta CTE/dT$, is less than 1.4ppb/°K$^2$.

11. A method of making a silica-titania glass having a hydroxyl content [OH] in the range of 600-2500 ppm, said method comprising

providing an apparatus at least one burner for converting a silica precursor and titania precursor into a silica-titania soot;

forming silica-titania soot in said at least one burner, and performing one selected from the group consisting of:

(a) depositing and consolidating, substantially simultaneously in a single step, said soot into glass in an atmosphere having a partial pressure of water vapor of ≥ 3%, and

(b) depositing said soot to form a porous preform and consolidating said porous preform into glass in an atmosphere of pure water vapor at a pressure of ≥3 atmospheres;

annealing said consolidated glass at less than an annealing point of 1010°C or less to form a glass having a fictive temperature $T_F$ of less than 950°C, said glass being heated to the annealing point at a rate of 100°C/Hr or less, held at the annealing point for a time in the range of 1-8 hours, and cooled from the annealing point at a cooling rate of ≥10°C/H.

12. The method according to claim 11, wherein the glass is cooled from the annealing point at a cooling rate of ≥5°C/Hr.

13. The method according to claim 11, wherein the glass is cooled from the annealing point at a cooling rate of ≥3°C/Hr.

14. The method according to any of claims 11 to 13, wherein the partial pressure of water is at least 4%.

15. The method according to any of claims 11 to 14, wherein said silica-titania soot is deposited as a porous preform and the porous preform is consolidated in pure water vapor to obtain OH levels in the range of 600 to 2500 ppm.

16. The method according to any of claims 11 to 14, wherein said silica-titania soot is deposited as a porous perform and the porous preform is consolidated in water vapor pressurized to 3 atmospheres to obtain OH levels in the range of 600 to 2500 ppm.

FIG. 1

FIG. 2

FIG. 3A

$$y = -0.122x^2 - 0.373x + 2230.039$$
$$R^2 = 0.997$$

FIG. 3B

$V = A + B/Tf \longrightarrow Tf\ (°C) = \{41000 \div (Peak\ Max-A)\}-273$

FIG. 4

FIG. 5A

Anneal Point $10^{13.2}$, 1009.3°C

Strain Point $10^{14.7}$, 900.5°C

Temp @ 10^12 Poise = 1094.8°C
Temp @ 10^13 Poise = 1022.3°C
Temp @ 10^14 Poise = 949.8°C

FIG. 5B

Anneal Point $10^{13.2}$, n/a
Strain Point $10^{14.7}$, n/a

Temp @ 10^12 Poise = 1095.7°C
Temp @ 10^13 Poise = 1028.1°C
Temp @ 10^14 Poise = 960.6°C

FIG. 6

FIG. 7

FIG. 8

# FIG. 9

FIG. 10A Prior Art

FIG. 10B Prior Art

FIG. 11

**EUROPEAN SEARCH REPORT**

Application Number

EP 11 15 5919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 003 098 A1 (SHINETSU CHEMICAL CO [JP]) 17 December 2008 (2008-12-17) | 1,11 | INV. C03B19/14 C03C3/076 C03C3/06 G03F1/00 |
| Y | * page 2, paragraph 12 - page 5, paragraph 52; claims 1-11; tables 1,2 * | 1-16 | |
| X | WO 2009/084717 A1 (ASAHI GLASS CO LTD [JP]; KOIKE AKIO [JP]; IWAHASHI YASUTOMI [JP]; KIKU) 9 July 2009 (2009-07-09) | 1,11 | |
| Y | * page 5, line 22 - page 7, line 24 * <br> * page 9, line 1 - page 18, line 23 * <br> * page 19, line 19 - page 21, line 2 * <br> * page 24, line 16 - page 25, line 20; claims 1-3; examples 1-7 * | 1-16 | |
| X | US 3 690 855 A (SCHULTZ PETER C) 12 September 1972 (1972-09-12) | 1 | |
| Y | * column 2, line 13 - column 5, line 50; claims 1-3; figures 1-3; example A * | 1-16 | |
| X | EP 1 608 598 B1 (ASAHI GLASS CO LTD [JP]) 18 July 2007 (2007-07-18) | 1 | |
| Y | * page 2, paragraph 10 - page 6, paragraph 50; claims 1-6; figure 1; examples 1-6 * | 1-16 | TECHNICAL FIELDS SEARCHED (IPC) <br> C03B <br> C03C <br> G03F |
| X | US 2006/179879 A1 (ELLISON ADAM J G [US] ET AL) 17 August 2006 (2006-08-17) | 1 | |
| Y | * page 2, paragraph 14 - page 5, paragraph 42; claims 1-14 * | 1-16 | |
| X | EP 1 795 506 A1 (SHINETSU CHEMICAL CO [JP]) 13 June 2007 (2007-06-13) | 1 | |
| Y | * page 2, paragraph 10 - page 3, paragraph 17 * <br> * page 4, paragraph 20 - page 7, paragraph 55; claims 1-18; example 1 * | 1-16 | |

-/--

The present search report has been drawn up for all claims

| Place of search | Date of completion of the search | Examiner |
|---|---|---|
| Munich | 29 September 2011 | Maurer, Renate |

EPO FORM 1503 03.82 (P04C01)

Europäisches
Patentamt
European
Patent Office
Office européen
des brevets

**EUROPEAN SEARCH REPORT**

Application Number

EP 11 15 5919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/288448 A1 (MAIDA SHIGERU [JP] ET AL) 26 November 2009 (2009-11-26) | 1 | |
| Y | * page 1, paragraph 11 - page 3, paragraph 32 * <br> * page 4, paragraph 43 - page 5, paragraph 55; claims 1-2; example 1 * <br> ----- | 1-16 | |

TECHNICAL FIELDS
SEARCHED      (IPC)

The present search report has been drawn up for all claims

| Place of search | Date of completion of the search | Examiner |
|---|---|---|
| Munich | 29 September 2011 | Maurer, Renate |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**     EP 11 15 5919

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2011

| Patent document cited in search report | | Publication date | Patent family member(s) | | Publication date |
|---|---|---|---|---|---|
| EP 2003098 | A1 | 17-12-2008 | CN | 101333069 A | 31-12-2008 |
| | | | JP | 2008303100 A | 18-12-2008 |
| | | | KR | 20080107299 A | 10-12-2008 |
| | | | US | 2008305941 A1 | 11-12-2008 |
| WO 2009084717 | A1 | 09-07-2009 | EP | 2229347 A1 | 22-09-2010 |
| | | | KR | 20100099211 A | 10-09-2010 |
| | | | US | 2010261597 A1 | 14-10-2010 |
| US 3690855 | A | 12-09-1972 | DE | 2140931 A1 | 24-02-1972 |
| EP 1608598 | B1 | 18-07-2007 | DE | 602004007637 T2 | 22-11-2007 |
| | | | EP | 1608598 A1 | 28-12-2005 |
| | | | WO | 2004089839 A1 | 21-10-2004 |
| | | | JP | 2005022954 A | 27-01-2005 |
| | | | US | 2005245382 A1 | 03-11-2005 |
| US 2006179879 | A1 | 17-08-2006 | NONE | | |
| EP 1795506 | A1 | 13-06-2007 | JP | 2007182367 A | 19-07-2007 |
| | | | KR | 20070061414 A | 13-06-2007 |
| | | | US | 2009288448 A1 | 26-11-2009 |
| | | | US | 2007134566 A1 | 14-06-2007 |
| US 2009288448 | A1 | 26-11-2009 | EP | 1795506 A1 | 13-06-2007 |
| | | | JP | 2007182367 A | 19-07-2007 |
| | | | KR | 20070061414 A | 13-06-2007 |
| | | | US | 2007134566 A1 | 14-06-2007 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61308073 B
- US 13028472 B
- US 3690855 A
- EP 1608598 A

- US 20060179879 A1
- US 3390855 A
- EP 1608598 B1

**Non-patent literature cited in the description**

- **SHELBY.** Density of TiO2 Doped Vitreous Silica. *Phys. Chem. of Glasses,* 1995, vol. 46 (5), 494-499
- **S. HAYASHI et al.** Development of Synthetic Silica Glass by the VAD Method. *Sumitomo,* 1990, vol. 42 (3), 1-27

- **SHELBY.** Density of TiO2 doped vitreous silica. *Phys. Chem. of Glasses,* 1995, vol. 46 (5), 494-499
- **A. AGARWAL ; K.M. DAVIS ; M. TOMOZAWA.** *J. Non-Crystalline Solids,* 1995, vol. 185, 191-198